# EUROPEAN PATENT APPLICATION

(11) **EP 0 639 478 A1**
(43) Date of publication of application: **22.02.1995**
(21) Application number: 94305061.7
(22) Date of filing: 11.07.1994
(51) Int. Cl.: B60N 2/16, F16D 41/20, F16D 43/02

(54) **Drum lock mechanism**

(30) Priority: 21.07.1993 GB 9315128
(71) Applicant: Dunlop Cox Limited, Nottingham NG8 4GP (GB)
(72) Inventor: Christopher, Hugh Charles, West Bridgford, Nottingham (GB)
(74) Representative: Treves, Barry William

(57) **Abstract**

A drum lock mechanism (2) forming part of a vehicle seat or window adjustment system in which a coiled spring (11) acts as a brake against an outer drum (12).

In order to reduce play the spring (11) is provided with a radially inwardly extending loop (23) which co-operates with an output shaft (9).

## Description

This invention relates to drum lock mechanisms generally and particularly, but not exclusively, to such mechanisms adapted for use as part of motor vehicle seat height adjustment devices.

Where a vehicle seat is provided with a manual height adjustment device, operative to raise and lower the seat, it is necessary to provide a locking mechanism to retain the seat in any chosen position. A requirement of such a mechanism is that the seat height should not change inadvertently for example when the seat is first sat on or, more importantly, during emergency braking when the effective weight of the seat and a person occupying the seat increases substantially.

When it is desired to alter the seat height it is necessary that the locking mechanism is rendered inoperable during adjustment but becomes locked once more as soon as the seat is stationary and the manual adjustment device released.

Typically such devices comprise a hand operated lever actuating height adjustment means through a drum lock. Known drum lock mechanisms have a plurality of friction elements resiliently urged into braking engagement with a brake drum when at rest and disengageable therefrom on lever operation. An example of such a mechanism is to be found in our European Patent Application Serial No. 0 479 449.

A simpler type of mechanism in which a plurality of coiled springs provide frictional elements self-urged into frictional engagement is disclosed in UK Patent Application Serial No. 2 211 565. This latter type suffers the disadvantage that manufacturing tolerances often result in unwanted free play in the mechanism as a whole. In use such play may lead to sloppiness of operation or irritating rattling of the mechanism when it is at rest. Our aforementioned European Patent Application discloses a construction which is intended to overcome these disadvantages but without using a coiled spring.

It is an object of the invention to provide a construction of drum lock mechanism incorporating a coiled spring and intended to overcome some of the aforedescribed disadvantages of prior art constructions.

According to the invention a drum lock mechanism comprises an output drive shaft, a rotatable input drive member and a coiled spring all coaxially mounted and rotatable relative to a fixed brake drum, wherein radially inwardly extending ends of the spring engage the input drive member, a radially inwardly extending intermediate portion of the spring is engaged by a drive key secured to the drive shaft and at rest the outer periphery of the spring is in braking engagement with an interior cylindrical surface of the brake drum, the arrangement providing that a torque applied to the drive shaft tends to unwind the coiled spring against the cylindrical surface and that application of a torque to the input drive member winds up the coiled spring out of braking engagement with said surface of the drum and drivably connects the input drive member to the output drive shaft.

When the application of a torque to the input drive member winds up the coiled spring out of braking engagement with said surface of the drum the drive member may be drivably connected to the drive shaft through the spring and the drive key or through the drive key alone.

Preferably, the input drive member is of generally tubular configuration with a slot extending along at least part of its length and forms a core about which the coiled spring is mounted with the slot providing side faces against each of which a respective one of the inwardly extending ends of the spring is able to locate and said intermediate portion of the spring is at least in part disposed within the slot and able to move angularly therein sufficiently to allow disengagement of the coiled spring from the cylindrical surface of the drum. Suitably the coiled spring and drive member are dimensioned so that when assembled, each end of the spring is resiliently urged toward the respective side face of the slot. The intermediate portion of the spring may be disposed equidistant from the ends of the spring.

An input drive element may be provided which is rigidly attached to one end of the drive member. This may be in the form of a cylindrical cover which fits over the aforementioned brake drum mechanism to which is attached an operating lever. This lever may suitably comprise a telescopic handle.

The brake drum may be attached to a backing plate having an annular boss concentric with the drum which provides a journal bearing for the output drive shaft. The backing plate may be integral with a formation spaced apart from the journal bearing which provides a second journal bearing surface for supporting the output drive shaft.

This backing plate and formation may be rigidly attached suitably with screw-threaded means to the chassis of an automotive vehicle seat. Axially distant from the drum lock mechanism, the shaft may be attached to one or more lever arms which on rotation of the shaft lift or lower the seat chassis.

A preferred embodiment of the invention will now be described by way of example only and with reference to the accompanying drawings, in which:-
Figure 1 is a side view of a manually operable seat height adjustment mechanism in accordance with the invention;
Figure 2 is a cross-sectional view taken along the line A-A of Figure 1 on an enlarged scale;

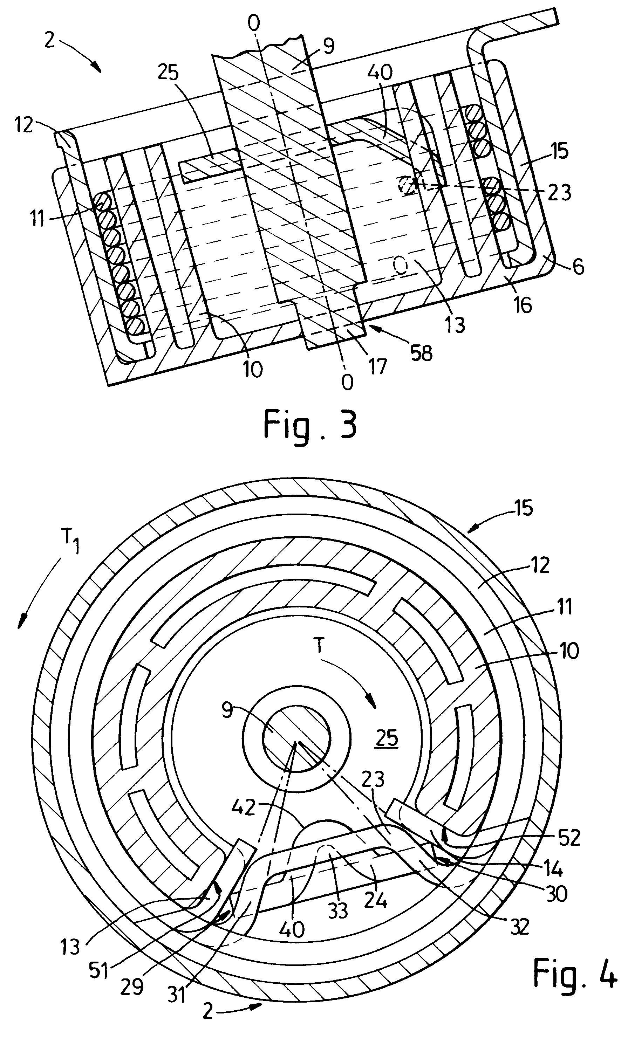

Figure 3 is a partial cross-sectional view taken along line B-B of Figure 1 on an enlarged scale; and
Figure 4 is an end sectional view of the mechanism in the direction C-C as shown in Figure 2 on an enlarged scale.

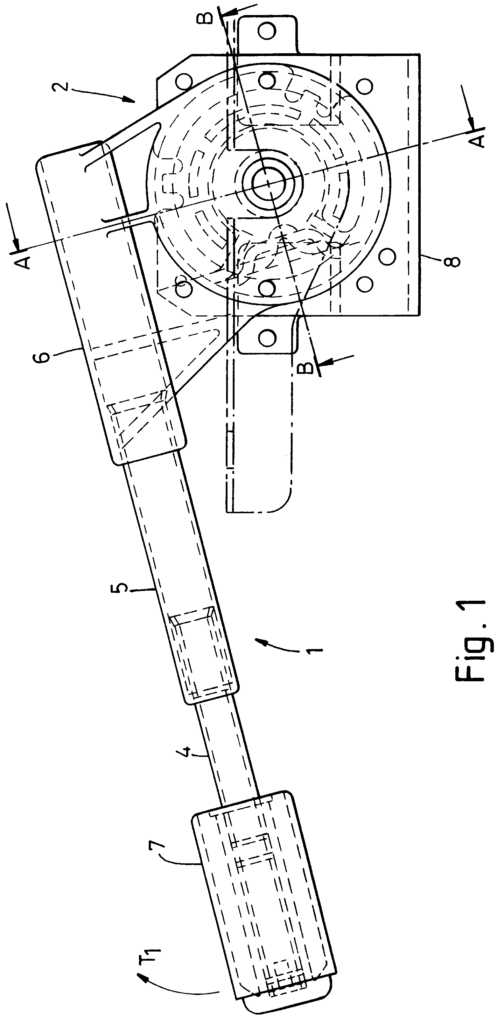

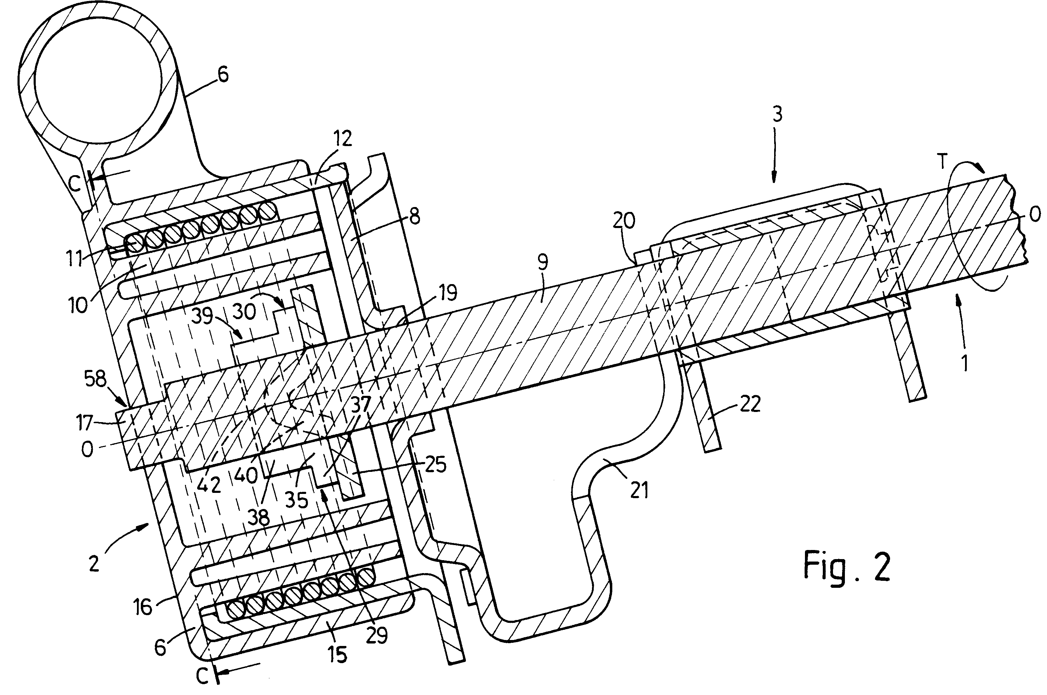

A manual seat height adjustment device, as illustrated in Figure 1 and shown in more detail in Figure 2, comprises a handle 1, a drum lock mechanism 2 and height adjustment mechanism 3. The handle 1 is telescopic so that sections 4 and 5 thereof can retract into housing 6 when not in use. At rest the mechanism 2 is locked and on manual movement of the knob 7 of the handle 1 rotation of the housing 6 results in corresponding rotation of the height adjustment mechanism 3.

With particular reference to Figure 2 and Figure 4, the drum lock mechanism 2 comprises a backing plate 8 which can be attached in known manner to the chassis of a motor vehicle seat, an output drive shaft 9 extending through the backing plate, a generally cylindrical input drive member 10 providing a core about which a coiled spring 11 is mounted and a brake drum 12 rigidly attached at one end to the backing plate 8 concentrically with the shaft 9.

The input drive member 10, as shown in Figure 4, has a slot extending along its length with side faces 51, 52 against which radially inwardly extending ends 13 and 14 of the coiled spring 11 are resiliently urged, end 13 against side face 51 and end 14 against side face 52. This member 10 is concentrically mounted to a cylindrical cover portion 115 of the housing 6 so as to be rotatable therewith.

An end face 16 of the housing 6 is provided with a central aperture 58 which locates and is a clearance fit on a reduced diameter end portion 17 of the output shaft 9. The cylindrical cover portion 15 locates and is a clearance fit in the outer periphery of the brake drum 12. This latter fit facilitates coaxial alignment of the shaft 9 with the input drive member 10 and coiled spring 11.

The shaft 9 is rotatably supported by passing through journal bearing 19 and resting on a second journal bearing surface 20 provided in a formation 21 extending behind the backing plate 8. Rearwardly of this formation 21 one or more lever arms 22 of the height adjustment mechanism 3 extend(s) radially from the shaft 9. Rotation of lever(s) 22 results in the movement of the seat up or down.

To effect rotation of the output drive shaft 9 by means of operation of the telescopic handle 1, one of the central coils of the spring 11 is provided with an intermediate portion 23 which is engaged by a key 24 of a generally circular plate 25 secured to the shaft 9. This plate 25 is rigidly secured to the shaft 9 with its plane perpendicular to the shaft axis and has a diameter which is smaller than the internal diameter of the coiled spring 11 except in the region of its intermediate portion 23.

The intermediate portion 23, as can be seen particularly in Figure 4, comprises two side sections 31 and 32, each extending radially inwards towards the rotational axis 0-0 of the shaft 9, and a straight central section 33, extending generally tangentially with respect to the shaft axis. The side sections 31 and 32 and the central section 33 form a radially inwardly extending loop in the spring 11.

The key 24 of the plate 25 comprises a tongue 35 integrally formed with and extending perpendicularly to the plane of the plate. As can be seen in Figure 2 the tongue has a wide region 37 closer to the plate 25 and a narrow region 38 further from the plate. The tongue is braced by a ridge 40 having an apex 42, the ridge extending at approxiamtely 45[deg] to the tongue and to the plate.

The narrow region 38 of the tongue 35 is dimensioned to fit tightly into the loop, so as to be positioned between and press against the two side sections 31 and 32. Being of spring steel, the side sections will spring slightly apart and this assists in preventing play in the mechanism. One end 14 of the coiled spring 11 may be positioned so as to engage one side 30 of the side region 39 of the tongue 35.

The coiled spring 11 is dimensioned so that at rest its outside diameter is a tight fit within an interior cylindrical surface of the brake drum 12. Thus, at rest, the coiled spring is in braking engagement with the drum 12 and rotation of input drive member 10 and the output drive shaft 9 will not occur. It will be appreciated that unwinding any part of the coiled spring 11 will force it into increased braking engagement with the drum 12. Conversely, winding up of the coiled spring will cause it at least in part to disengage the drum thereby reducing the braking engagement.

In use when static the lever(s) 22 apply a torque T to the shaft 9. This torque T is a function of the weight of the seat and a seat occupant, this weight increasing when the vehicle is braking or accelerating.

A torque T applied in the clockwise direction shown in Figure 4, transmitted to the spring 11 by the key 24, will tend to unwind the coils of the spring between the side sections 31 of the intermediate portion 23 and end 13, thus increasing the braking effect of these coils against the drum 12. If for any reason the torque T is applied in the opposite, anti-clockwise, direction the same effect will be observed because in that instance coils between the side section 32 of intermediate portion 23 and end 14 will tend to unwind.

If on the other hand a torque T₁ is applied in an anti-clockwise direction, as shown in Figure 4, by means of the handle 1 to the input member 10 there will be relative angular movement of end 13 toward the side section 31 of the intermediate portion 23 of the coiled spring 11. This will wind those coils therebetween around the outer periphery of the input drive member 10 out of braking engagement with the drum 12. There will also be angular movement of the other end 14 away from the intermediate portion 23 which will tend also to relax the remaining coils of the spring.

If the torque T₁ is sufficiently large the side face 51 of the slot in the drive member 10 will displace the end 13 sufficiently and contact the adjacent side edge 29 of the wide region 37 of the tongue 35. There is then direct drive between the drive member 10 and the key 24 of the plate 25 which is secured rigidly to the output shaft 9, i.e. the drive is not through any coils of the spring. If the torque T₁ is applied in the opposite drection i.e. clockwise, then end 14 will move angularly towards side section 32 of the intermediate portion 23 similarly urging the spring out of braking engagement. If the torque T₁ in the clockwise direction is sufficiently large the side face 52 of the slot in the drive member 10 will angularly displace the end 14 and contact the side edge 30 of the wide region 37 adjacent to the side face 52. There is therefore direct drive. However, depending on the exact position of end 14, it may be sandwiched between the side face 52 and the side edge 30, so again providing direct drive i.e. not through any of the coils of the spring 11.

Once the spring 11 is no longer locked in braking engagement with the drum 12, rotation of the handle 1 is passed by means of input member 10 and spring 11 to effect corresponding rotation of the shaft 9 and operation of the height adjustment mechanism 3. As soon as the operating handle 1 is released the torque T on the output shaft 9 alone acts on the drum lock mechanism 2 causing it to lock up in the aforedescribed manner.

In a modification of the embodiment described above the tongue 25 which comprises the key 24 is of constant width equal to the narrow region 38. The tongue fits tightly between the two side sections 31 and 32 of the intermediate portion 23, but the torque T1 has to be very large to cause the end 13 (or end 14 if T₁ is in the opposite direction to that shown in Figure 4) to move sufficiently and allow the side 51 to engage the adjacent side edge 29 of the tongue 35. Thus in this modification the drive is usually indirect i.e. through some of the coils of the spring 11.

It will be understood that the described embodiment provides a construction of drum lock mechanism 2 in which no free play needs to be taken up on operation of the handle 1. It may be desired to use a coiled spring 11 dimensioned so that its ends 13, 14 are not resiliently urged against the sides 51 and 52 of the slot in the input drive member 10. In this instance there may be a small amount of play which could be far less than would occur due to the aggregate of tolerances in some prior art mechanisms.

The embodiment described is adapted for specific use with a vehicle seat. It will be understood that this drum lock mechanism may be used in other circumstances where a one way drive is desired e.g. for the height adjustment of a window.

## Claims

1. A drum lock mechanism comprising an output drive shaft (9), a rotatable input drive member (10) and a coiled spring (11), all coaxially mounted and rotatable relative to a fixed brake drum (12), characterised in that radially inwardly-extending ends (13, 14) of the spring (11) engage the input drive member (10), a radially inwardly-extending intermediate portion (23) of the spring is engaged by a drive key (24) secured to the drive shaft (9) and at rest the outer periphery of the spring is in braking engagement with an interior cylindrical surface of the brake drum (12), the arrangement providing that a torque applied to the drive shaft (9) tends to unwind the coiled spring against the cylindrical surface and that application of a torque to the input drive member (10) winds up the coiled spring (11) out of braking engagement with said surface of the drum (12) and drivably connects the input drive member (10) to the output drive shaft (9).

2. A drum lock mechanism according to Claim 1, characterised in that when the application of a torque to the input drive member (10) winds up the coiled spring (11) out of braking engagement with said surface of the drum (12), the drive member (10) is drivably connected to the drive shaft (9) through the spring (11) and the drive key (24).

3. A drum lock mechanism according to Claim 1 characterised in that when the application of a torque to the input drive member (10) winds up the coiled spring (11) out of braking engagement with said surface of the drum (12), the drive member (10) is drivably connected to the drive shaft (9) through the drive key (24) alone.

4. A drum lock mechanism according to any one of the preceding claims characterised in that the input drive member (10) is of generally tubular configuration with a slot extending along at least part of its length and forms a core about which the coiled spring (11) is mounted with the slot providing side faces (51, 52) against each of which a respective one of the inwardly-extending ends (13, 14) of the spring (11) is able to locate.

5. A drum lock mechanism according to Claim 4 characterised in that said intermediate portion (23) of the spring (11) is at least in part disposed within the slot in the input drive member (10) and able to move angularly therein sufficiently to allow disengagement of the coiled spring (11) from the cylindrical surface of the drum (12).

6. A drum lock mechanism according to Claim 4 or Claim 5 characterised in that the coiled spring (11) and drive member (10) are dimensioned so that when assembled, each end (13, 14) of the spring (11) is resiliently urged towards the respective side face (51, 52) of the slot formed in the input drive member (10).

7. A drum lock mechanism according to any one of the preceding claims characterised in that the intermediate portion (23) of the spring (11) is disposed equi-distant from the ends (13, 14) of the spring (11).

8. A drum lock mechanism according to any one of the preceding claims characterised in that an input drive element is rigidly attached to one end of the drive member (10).

9. A drum lock mechanism according to Claim 8 characterised in that the input drive element is in the form of a cylindrical cover (15) which fits over the brake drum (12).

10. A drum lock mechanism according to Claim 9 characterised in that an operating lever is attached to the cylindrical cover (15).

11. A drum lock mechanism according to Claim 10 characterised in that the lever comprises a telescopic handle (1).

12. A drum lock mechanism according to any one of the preceding claims characterised in that the brake drum (12) is attached to a backing plate (8) having an annular boss (19) concentric with the drum which provides a journal bearing for the output drive shaft (9).

13. A drum lock mechanism according to Claim 12 characterised in that the backing plate (8) is integral with a formation (21) spaced apart from the journal bearing (19) which provides a second journal bearing surface (20) for supporting the output drive shaft (9).

14. A drum lock mechanism according to Claim 12 or Claim 13 characterised in that the backing plate (8) and formation (21) are capable of being rigidly attached with screw-threaded means to the chassis of an automotive vehicle seat.

15. A mechanism comprising a drum lock mechanism in accordance with any one of the preceding claims characterised in that the shaft of the drum lock mechanism is attached to at least one lever arm (22) which on rotation of the shaft (9) raises or lowers a seat.
